# EUROPEAN PATENT APPLICATION

(11) **EP 4 571 632 A1**
(43) Date of publication of application: **18.06.2025**
(21) Application number: 23216473.1
(22) Date of filing: 13.12.2023
(51) Int. Cl.: G06T 5/50, G06T 5/60

(54) **CONTRAST-ENHANCED DIAGNOSTIC IMAGING**

(71) Applicant: Relios.vision GmbH, 53113 Bonn (DE)
(72) Inventor: Radbruch, Alexander, 53115 Bonn (DE); Deike-Hofmann, Katerina, 53113 Bonn (DE); Kobler, Erich, 53129 Bonn (DE); Haase, Robert, 53127 Bonn (DE); Effland, Alexander, 53227 Bonn (DE); Pinetz, Thomas, 53121 Bonn (DE)
(74) Representative: Fuchs Patentanwälte Partnerschaft mbB

(57) **Abstract**

A method (100), performed by means of a computer system (400), for training a machine learning model (218), the machine learning model (218) configured to generate contrast-enhanced diagnostic images (220), comprises receiving (110) at least one reference baseline image (202) of a body region of a patient (P), at least one reference low-dose image (204) of the body region of the patient (P) and at least one reference high-dose image (210) of the body region of the patient (P), the reference low-dose image (204) acquired when a first amount of a contrast-enhancing agent has been applied to the body region, the reference high-dose image (210) acquired when a second amount of the contrast-enhancing agent larger than the first amount has been applied to the body region, and the reference baseline image (202) acquired when less than the first amount of the contrast-enhancing agent has been applied to the body region. The method (100) further comprises producing (120) a reference low-dose subtraction image (208) at least partially based on a difference between the reference baseline image (202) and one or more of the at least one reference low-dose image (204), and producing a reference high-dose subtraction image (214) at least partially based on a difference between the reference high-dose im-age (210) and the reference baseline image (202), determining (130) at least one reference high-dose noise parameter (216; 308, 312) indicative of one or more noise characteristics of the reference high-dose subtraction image (214); and, applying (140), based at least partially on the reference high-dose noise parameter (216; 308, 312), a noise reduction procedure to the reference high-dose subtraction image (214) to produce a noise-reduced target image (222). The method (100) further comprises training (150), based at least on the reference low-dose subtraction image (208) and the noise-reduced target image (222), at least one machine learning model (218) configured to generate, based on input data relating at least to an input low-dose subtraction image (208), a prediction high-dose subtraction image (220).

## Description

### Background of the Disclosure

For increasing the relevant information content of diagnostic images, especially in the context of magnetic resonance imaging, but not limited thereto, a contrast-enhancing agent is often delivered to the body of the patient before images are acquired. The contrast-enhancing agent modifies a response of one or more tissue types in the examined region of the patient's body to a probing tool of the imaging device, such as a fluctuating electro-magnetic field. By this modification, a discernibility of different tissue types in the acquired image can be improved.

The production of contrast-enhancing agents is often expensive. Moreover, contrast-enhancing agents are known to have negative effects on the health of some patients.

Accordingly, there exists a need for improved contrast-enhanced diagnostic imaging.

### Brief Summary of the Disclosure

The problem is solved by the methods according to claim 1 and claim 8, a computer program product according to claim 11, a computer system according to claim 12, an image data processing system according to claim 13, a diagnostic imaging system according to claim 14 and a set of diagnostic images according to claim 15.

According to an aspect, a method, performed by means of a computer system, for training a machine learning model, the machine learning model configured to generate contrast-enhanced diagnostic images, is provided.

The method comprises receiving at least one reference baseline image of a body region of a patient, at least one reference low-dose image of the body region of the patient and at least one reference high-dose image of the body region of the patient, the reference low-dose image acquired when a first amount of a contrast-enhancing agent has been applied to the body region, the reference high-dose image acquired when a second amount of the contrast-enhancing agent larger than the first amount has been applied to the body region, and the reference base-line image acquired when less than the first amount of the contrast-enhancing agent has been applied to the body region.

The method further comprises producing a reference low-dose subtraction image at least partially based on a difference between the reference baseline image and one or more of the at least one reference low-dose image, and producing a reference high-dose subtraction image at least partially based on a difference between the reference high-dose image and the reference base-line image.

The method further comprises determining at least one reference high-dose noise parameter indicative of one or more noise characteristics of the reference high-dose subtraction image, applying, based at least partially on the reference high-dose noise parameter, a noise reduction procedure to the reference high-dose subtraction image to produce a noise-reduced target image, and training, based at least on the reference low-dose subtraction image and the noise-reduced target image, at least one machine learning model configured to generate, based on input data relating at least to an input low-dose subtraction image, a prediction high-dose subtraction image.

By the provided method, it is enabled that, once the machine learning model has been trained, a high-dose subtraction image, corresponding to increased contrast enhancement, is generated, in particular predicted, without a necessity to apply correspondingly high doses of a contrast-enhancing agent to the body region of a patient. In this way, negative effects on the health of the patient as well as increased costs involved in the use of high doses of contrast-enhancing agent can be avoided.

Moreover, by the provided method, it is enabled that a machine learning model for predicting a high-dose subtraction image is trained based on a noise-reduced target image. In this way, a necessity for the machine learning model to learn a detector-specific noise is dispensed with. Thus, by the provided method, the trained machine learning model is applicable to image data independently from a specific detector system that was used for acquiring the image data.

In addition, by the provided method, as the machine learning model is trained based on a noise-reduced target image, the machine learning model does not emulate a noise, by way of noise prediction, in the generated prediction high-dose subtraction image. Experiments which were performed by the inventors have revealed that noise which is emulated by a machine learning model that has been trained based on a noisy target image (in particular a reference high-dose image) occasionally contains undesirable artifacts, whereas such artifacts are avoidable by using a noise-reduced target image (in particular a noise-reduced high-dose subtraction image). Quality and significance of the prediction high-dose subtraction image can thus be improved.

Furthermore, the aforesaid advantages are facilitated by applying a noise reduction procedure to the reference high-dose subtraction image, wherein the noise reduction procedure is performed based at least partially on a reference high-dose noise parameter of the reference high-dose subtraction image. The reference high-dose noise parameter may include an estimated noise level and an estimated distribution of noise components in the reference high-dose subtraction image. Determining the reference high-dose noise parameter is possible by the assumption that a signal strength in the reference high-dose image is exclusively increased relative to the reference baseline image by the higher dose of contrast-enhancing agent. Accordingly, pixel information in the reference high-dose subtraction image which represents a decrease relative to the reference baseline image can be assumed to represent the system-specific noise and, thus, is available for automated noise analysis.

The method may further comprise determining at least one reference low-dose noise parameter indicative of one or more noise characteristics of the reference low-dose subtraction image. In this case, training the at least one machine learning model may be further performed based on the reference low-dose noise parameter.

By additionally considering at least one reference low-dose noise parameter in training the machine learning model, prediction of a high-dose subtraction image can be further improved.

The prediction high-dose subtraction image may be configured for being applied to an anatomical image of the body region of the patient to produce a combined contrast-enhanced image of the body region. In particular, a contrast enhancement of the combined contrast-enhanced image may be larger than a contrast enhancement of an input low-dose image underlying the input low-dose subtraction image.

By applying, in particular superimposing, the prediction high-dose subtraction image to an anatomical image of the body region of the patient, significance and usability of the generated image information can be further increased. It enables that image regions having enhanced contrast are shown in their anatomical context. Moreover, in this way, the generated image information can be provided to medical staff in a similar format, especially with a similar overall appearance, as conventional high-dose diagnostic images, thus improving a medical staff's convenience and easy grasp of the displayed information.

Since the prediction high-dose subtraction image can be generated essentially noise-free, superimposing the prediction high-dose subtraction image on any anatomical image of the body region of the patient may not affect a noise pattern, in particular a local distribution of relative noise intensities over neighboring image regions, such as over neighboring pixels, included in the respective anatomical image. Accordingly, a set of diagnostic images that have been produced to show different degrees of contrast enhancement by means of the proposed method, such as a baseline anatomic image and the baseline anatomic image having the prediction high-dose subtraction image superimposed (i.e., a combined contrast-enhanced image), may show agreement with respect to the noise pattern included in each of the images while differing from each other with respect to the degree of contrast enhancement shown in the images. Agreement with respect to the (local) noise pattern may also include cases in which a noise contained in one of the images appears modified resulting from a noise-unspecific operation, such as an overall upscaling or downscaling of intensities contained in the respective image.

Producing the reference low-dose subtraction image may comprise subtracting image data included in, and/or derived at least partially from, the reference baseline image from image data included in, and/or derived at least partially from, one or more of the at least one reference low-dose image. Additionally, or alternatively, producing the reference high-dose subtraction image may comprise subtracting image data included in, and/or derived at least partially from, the reference baseline image from image data included in, and/or derived at least partially from, the reference high-dose image.

Applying the noise reduction procedure to the reference high-dose subtraction image may comprise at least one of applying a statistical noise filter, in particular a guided filter, to the reference high-dose subtraction image, wherein a granularity of the statistical noise filter is selected based at least partially on the reference high-dose noise parameter, and/or processing the reference high-dose subtraction image by means of at least one second machine learning model, in particular a neural network, which has been trained for noise reduction on image data. In particular, the reference high-dose noise parameter may be provided as input data to the second machine learning model.

Determining the reference high-dose noise parameter may be performed based on accumulated pixel data of the reference high-dose subtraction image. The accumulated pixel data may have been accumulated from pixel data having an inverse sign relative to a prevailing sign of the pixel data of the reference high-dose subtraction image. As said, by the assumption that a signal strength in the reference high-dose image is exclusively increased relative to the reference baseline image by the higher dose of contrast-enhancing agent, it can be assumed that subtraction of the reference baseline image from the reference high-dose image will lead to pixel data whose prevailing sign will correspond to the enhanced contrast signal. Consequently, pixel data having an inverse sign relative to the prevailing sign can be assumed to represent noise. Thus, accumulating such pixel data having the inverse sign can be assumed to yield a representation of the system-specific noise contained in the reference images.

The method may further comprise spatially registering and intensity-normalizing any of the reference baseline image, the reference low-dose image, the reference high-dose image, the reference low-dose subtraction image and the reference high-dose subtraction image. In this case, any of the producing, determining, applying and training steps may be performed using the respective spatially registered and intensity-normalized reference images.

Training the at least one machine learning model may comprise calculating a loss based on a difference, in particular a statistical divergence, between the noise reduced target image and the prediction high-dose subtraction image generated by means of the at least one machine learning model, and adjusting the at least one machine learning model in accordance with the calculated loss.

According to another aspect, a method, performed by means of an image data processing system, for generating a contrast-enhanced diagnostic image of a body region of a patient, is provided.

The method comprises receiving an input baseline image of a body region of a patient and at least one input low-dose image of the body region of the patient, the input low-dose image acquired when a first amount of a contrast-enhancing agent has been applied to the body region and the input baseline image acquired when less than the first amount of the contrast-enhancing agent has been applied to the body region.

The method further comprises producing an input low-dose subtraction image at least partially based on a difference between the input low-dose image and the input baseline image, and generating, at least partially by means of a trained machine learning model, a prediction high-dose subtraction image based at least on the input low-dose subtraction image, wherein the prediction high-dose subtraction image corresponds to a contrast enhancement relative to the input baseline image which is larger than a contrast enhancement of the input low-dose image relative to the input baseline image. The trained machine learning model has been trained based on one or more noise-reduced target images.

The trained machine learning model may have been trained in accordance with the method as presently provided.

The method may further comprise spatially registering and intensity-normalizing any of the input baseline image, the input low-dose image and the input low-dose subtraction image, wherein any of the producing, determining and generating steps are performed using the respective spatially registered and intensity-normalized input images.

Additionally, or alternatively, the method may further comprise applying the prediction high-dose subtraction image to an image of the body region to produce a combined contrast-enhanced image of the body region, and outputting the combined contrast-enhanced image of the body region. Before applying the prediction high-dose subtraction image to an image of the body region to produce a combined contrast-enhanced image, the prediction high-dose subtraction image may be multiplied by a scalar value or transformed by a scalar-valued monotonic function, in particular derived from meta data obtained from the input baseline and low-dose images, to modify the contrast enhancement of the combined contrast-enhanced image relative to the input baseline image.

According to another aspect, a computer program product is provided. The computer program product comprises portions of program code which, when executed by a processor of a computer device, will cause the computer device to perform a method as provided herein.

According to another aspect, a computer system, in particular for training a machine learning model, is provided. The computer system comprises a processor and a storage device operatively coupled to the processor, the storage device storing portions of program code which, when executed by the processor, cause the computer system to perform a method as provided herein.

According to another aspect, an image data processing system, in particular for generating a contrast-enhanced diagnostic image of a body region of a patient, is provided. The image data processing system comprises a processor and a storage device operatively coupled to the processor, the storage device storing portions of program code which, when executed by the processor, cause the image data processing system to perform a method as provided herein.

According to another aspect, a diagnostic imaging system is provided. The diagnostic imaging system comprises an image data processing system as provided herein, at least one image sensor configured to detect spatially resolved image information pertaining to a patient and to output corresponding image data towards the image data processing system, and a diagnostic image outputting interface configured to output a contrast-enhanced diagnostic image which has been generated by means of the image data processing system at least partially based on image data received from the image sensor.

According to another aspect, a set of diagnostic images of a body region of a patient is provided. The set of diagnostic images comprises at least two images of the body region of the patient which show agreement with respect to a noise pattern included in each of the at least two images and which differ from each other with respect to a degree of contrast enhancement shown in the at least two images. In particular, applying a prediction high-dose subtraction image to an image of the body region to produce a combined contrast-enhanced image will result in an agreement with respect to a noise pattern between the two images.

### Brief Description of the Drawings

Further details, objects and advantages of the invention will become clearer from the detailed description and the drawings. There is shown in:
- Fig. 1: a flow diagram of a method for training a machine learning model;
- Fig. 2: a data flow scheme corresponding to the method of claim 1;
- Fig. 3: a data flow scheme of a statistical analysis of noise contained in a diagnostic image;
- Fig. 4: a computer system for training a machine learning model;
- Fig. 5: a flow diagram of a method for generating a contrast-enhanced diagnostic image;
- Fig. 6: an image processing system for generating contrast-enhanced diagnostic images;
- Fig. 7: a diagnostic imaging system, and
- Figs. 8A to 8C: examples of contrast-enhanced diagnostic images obtained by different contrast-enhancement techniques.

### Detailed Description of the Disclosure

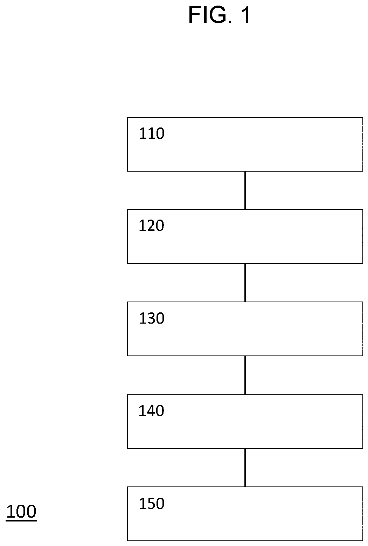

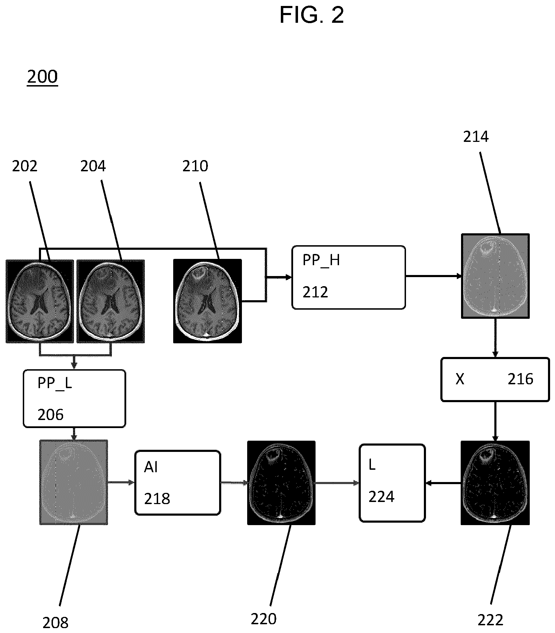

Fig. 1 shows a flow diagram of a method 100 for training a machine learning model. The method 100 is performed by means of a computer system. Moreover, the machine learning model is configured to generate contrast-enhanced diagnostic images, as described exemplarily in more detail below with reference to Figs. 2 to 4.

The method 100 comprises receiving at least one reference baseline image of a body region of a patient, at least one reference low-dose image of the body region of the patient, and at least one reference high-dose image of the body region of the patient, step 110. The reference low-dose image has been acquired when a first amount of a contrast-enhancing agent has been applied to the body region of the patient. The reference high-dose image has been acquired when a second amount of the contrast-enhancing agent larger than the first amount has been applied to the body region of the patient, and the reference baseline image has been acquired when less than the first amount of the contrast-enhancing agent has been applied to the body region of the patient.

In some examples, the contrast-enhancing agent is a pharmaceutical which is injected to the patient's body to be delivered to the body region, for example, by blood circulation and/or other diffusion processes in the patient's body. Moreover, in some examples, the first amount of the contrast-enhancing agent may correspond to a first injection of the contrast-enhancing agent, whereas the second amount of the contrast-enhancing agent is achieved by injecting a supplementary quantity of the contrast-enhancing agent to the body of the patient while the first amount is still effective in the body region. In other examples, the second amount of the contrast-enhancing agent corresponds to the amount of an injection which is applied to the body of the patient when a smaller, first amount of the contrast-enhancing agent is no longer effective in the body region of the patient. Additionally, or alternatively, the reference baseline image is acquired in some examples when no contrast-enhancing agent is effective in the body region of the patient or, in some examples, when only a spurious amount of the contrast-enhancing agent is effective in the body region of the patient.

The method 100 further comprises producing a reference low-dose subtraction image at least partially based on a difference between the reference baseline image and one or more of the at least one reference low-dose image, and producing a reference high-dose subtraction image at least partially based on a difference between the reference high-dose image and the reference baseline image, step 120. In some examples, the reference low-dose subtraction image and the reference high-dose subtraction image are produced respectively by subtracting the pixel values of the image which has the lesser contrast enhancement from the corresponding pixel values of the image showing the greater contrast enhancement. Additionally, or alternatively, subtracting the respective images from each other is preceded in some examples by spatially registering the various images, for example, in accordance with body structures shown in the images, to compensate for relative movements of a patient-detector arrangement between acquisitions of the images, and/or by intensity-normalizing the various images, for example, to compensate for varying imaging conditions.

The method 100 further comprises determining at least one reference high-dose noise parameter which is indicative of one or more noise characteristics of the reference high-dose subtraction image, step 130. In some examples, the reference high-dose noise parameter is indicative of at least one of a mean noise level and a distribution of noise components, for example, noise frequency components, in the reference high-dose subtraction image.

The method 100 further comprises applying a noise reduction procedure to the reference high-dose subtraction image to produce a noise-reduced target image, step 140. Applying the noise reduction procedure is performed based at least partially on the previously determined reference high-dose noise parameter(s).

The method 100 further comprises training at least one machine learning model based at least on the reference low-dose subtraction image and the noise-reduced target image, step 150. The at least one machine learning model is configured to generate the prediction high-dose subtraction image based on input data relating at least to an input low-dose subtraction image.

As described in more detail below, the method 100 enables training at least one machine learning model to generate a noise-reduced, for example noise-free, prediction high-dose subtraction image.

Fig. 2 shows schematically and exemplarily a data flow scheme 200 according to examples of the method 100 for training a machine learning model. The data flow scheme 200 starts from a set of sensorily acquired, or computer-generated, reference images 202, 204, 210 corresponding to different levels of contrast enhancement in a body region of a patient. A reference baseline image 202 shows the body region of the patient without contrast enhancement or with little contrast enhancement. A reference low-dose image 204 shows the same body region of the patient as the reference baseline image 202 after a first amount of a contrast-enhancing agent has been applied to the body region, thus leading to enhanced contrast relative to the reference baseline image 202. A reference high-dose image 210 shows again the same body region of the patient as the reference baseline image 202 and the reference low-dose image 204, wherein a second amount of the contrast-enhancing agent larger than the first amount is effective in the body region at the moment of acquisition of the reference high-dose image 210, thus leading to enhanced contrast in the reference high-dose image 210 relative to the reference low-dose image 204.

The reference baseline image 202 and the reference low-dose image 204 are subjected to a contrast preserving preprocessing 206. In the contrast preserving preprocessing 206, for example, the reference baseline image 202 and the reference low-dose image 204 become spatially registered with respect to each other and intensity-normalized. Furthermore, the spatially registered and intensity-normalized reference low-dose image 204 and reference baseline image 202 are subtracted from each other to obtain a spatially registered and intensity-normalized reference low-dose subtraction image 208. In this process, for example, the pixel data of the spatially registered and intensity-normalized reference baseline image 202 is subtracted, pixel by pixel, from the pixel data of the spatially registered and intensity-normalized reference low-dose image 204.

As a result of the contrast preserving preprocessing 206, the obtained reference low-dose subtraction image 208 represents the difference in contrast enhancement between the reference low-dose image 204 and the reference baseline image 202. In addition, noise contained in both the reference baseline image 202 and the reference low-dose image 204 is essentially preserved and represented in the reference low-dose subtraction image 208.

The reference low-dose subtraction image 208 is then provided as input to a machine learning model, block 218. The machine learning model 218 is configured to generate, based on the reference low-dose subtraction image 208, a prediction high-dose subtraction image 220. More specifically, the machine learning model 218 is configured to process the reference low-dose subtraction image 208, including signal data representative of the relative contrast enhancement between the reference baseline image 202 and the reference low-dose image 204 as well as noise contained in the reference low-dose subtraction image 208, in such way that noise contained in the reference low-dose subtraction image 208 becomes reduced relative to the contrast signal. As a result, a prediction high-dose subtraction image 220 is obtained which exhibits a contrast signal corresponding to a higher contrast enhancement than achieved by the first amount of contrast-enhancing agent delivered to the patient for acquiring the reference low-dose image 204.

In an analogous way, the reference baseline image 202 and the reference high-dose image 210 are subjected to a contrast preserving preprocessing 212. In the example, in the contrast preserving preprocessing 212, the reference baseline image 202 and the reference high-dose image 210 further become spatially registered and intensity-normalized with respect to each other. Furthermore, the spatially registered and intensity-normalized reference high-dose image 210 and reference baseline image 202 are subtracted from each other to obtain a spatially registered and intensity-normalized reference high-dose subtraction image 214. In this process, for example, the pixel data of the spatially registered and intensity-normalized reference baseline image 202 is subtracted, pixel by pixel, from the pixel data of the spatially registered and intensity-normalized reference high-dose image 210.

As a result of the contrast preserving preprocessing 212, the reference high-dose subtraction image 214 represents the difference in contrast enhancement between the reference high-dose image 210 and the reference baseline image 202, in a spatially registered and intensity-normalized format. Moreover, noise contained in both the reference baseline image 202 and the reference high-dose image 210 is essentially preserved and represented in the reference high-dose subtraction image 214.

In the example, the reference high-dose subtraction image 214 widely resembles the reference low-dose subtraction image 208 with respect to the performed preprocessing and contained information. However, due to the larger amount of contrast-enhancing agent underlying the reference high-dose image 210 in comparison to the reference low-dose image 204, the reference high-dose subtraction image 214 shows a stronger contrast enhancement, corresponding to a stronger contrast signal in the reference high-dose subtraction image 214, then the reference low-dose subtraction image 208.

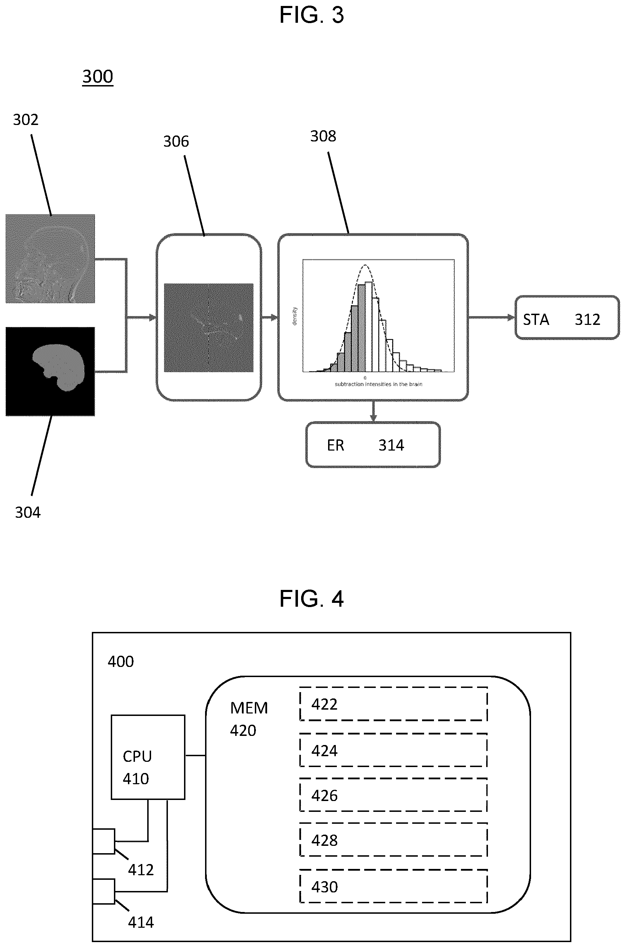

The reference high-dose subtraction image 214 is subjected to a noise reduction procedure 216, which effectively means an extraction of the contrast signal from the noisy reference high-dose subtraction image 214. An example of a contrast extraction procedure is described in more detail below in connection with Fig. 3. As a result of the contrast extraction 216, a noise-reduced target image 222, showing the contrast signal of the reference high-dose subtraction image 214 after a reduction, for example a statistical elimination, of the noise contained in the reference high-dose image 214.

The noise-reduced target image 222 serves as a target image for the machine learning model 218. That is, the machine learning model 218 is trained to generate, based on the reference low-dose subtraction image 208, a prediction high-dose subtraction image 220 that emulates, by way of prediction, the noise-reduced target image 222.

An accuracy of the machine learning model 218 can be determined by calculating a loss based on the difference between the noise-reduced target image 222 and the prediction high-dose subtraction image 220, at block 224. For example, the loss determined at block 224 is fed back in some examples to the machine learning model 218 to automatically adjust the machine learning model 218, in accordance with the determined loss, to minimize loss in subsequent applications of the machine learning model 218.

When it is determined, based on determined loss 224, that the machine learning model 218 is suitably adjusted to generate prediction high-dose subtraction images 220 with a demanded accuracy, prediction high-dose subtraction images 220 that have been generated by the machine learning model 218 are available for diagnostic use. In some examples, prediction high-dose subtraction images 220 become superimposed to anatomical images of the respective body region, such as baseline images or low-dose images, to obtain strongly contrast-enhanced images of the body region in the given anatomical context. Thus, a machine learning model which has been trained in accordance with the described method makes an application of high doses of the contrast-enhancing agent, such as the dose underlying the reference high-dose image 210, dispensable in later uses.

For illustration purposes, the preprocessing operations at blocks 206, 212 are shown in Fig. 2 separate from the machine learning model 218 and the contrast signal extraction 216. However, as will be understood, in examples of the described methos, a machine learning model 218 and/or a contrast signal extraction procedure 216 can be adapted to include the preprocessing operations 206, 212 or at least parts thereof.

Fig. 3 shows schematically and exemplarily a dataflow scheme 300 for statistical analysis of image data for use in a noise reduction procedure, for example, in the contrast signal extraction 216.

For statistically analyzing the subtraction image 302, for example, corresponding to the reference high-dose subtraction image 214, with respect to its contrast signal and contained noise, first a relevant image region is selected. In the shown example, the cerebral region is selected from the subtraction image 302 using a standard template 304 of a cerebral region, which has been spatially registered with the subtraction image 302. The selection yields a reduced subtraction image 306, which shows the subtraction image 302 reduced to the relevant region.

As part of a statistical analysis 308, the distribution of pixel values of the reduced subtraction image 306 is examined. For the following analysis, it is assumed that the contrast signal in the reference high-dose image 210 is exclusively increased relative to the reference baseline image 202. Accordingly, in the reduced subtraction image 306, pixel data belonging to the contrast signal is assumed to be entirely positive or negative, depending on the subtraction, whereas noise contained in the reduced subtraction image 306 is assumed to be equally distributed to both positive and negative pixel values in the reduced subtraction image 306. Consequently, in the distribution of the pixel data, it is assumed that a prevailing sign of the pixel data, i.e. positive or negative, corresponds to the combination of contrast signal and noise, whereas pixel data having the inverse sign is assumed to represent noise only. For statistically analyzing the noise contained in the reduced subtraction image 306, the pixel data having the inverse sign to the prevailing sign of the overall pixel data of the reduced subtraction image 306, thus, is considered representative of the noise in the image.

Based on the distribution of pixel data having the inverse sign relative to the prevailing sign, one or more noise parameters indicative of one or more noise characteristics of the noise in the reduced subtraction image 306 are determined. Such noise parameters include in some examples a mean noise level, a spectral distribution of spatial noise frequencies, and the like. In addition, certain image errors, such as motion in the image, can be determined. Accordingly, the analysis yields one or more noise parameters 312 usable in statistical noise reduction as well as detected errors, such as motion artifacts, 314.

For reducing the noise contained in the reduced subtraction image 306, a statistical noise filter can be applied, such as a guided filter. In this context, a granularity, or any adjustable control parameter, of the statistical noise filter is adjusted based on the noise parameters 312 determined by the aforesaid statistical procedure. Alternatively, or additionally, a noise reduction procedure includes subjecting the reduced subtraction image 306 to a second machine learning model, such as a neural network, which has been trained for noise reduction on image data. In this case, noise parameters determined by the statistical procedure can be additionally provided as input data to the second machine learning model.

As a result, a noise-reduced version of the reduced subtraction image 306, corresponding to the noise-reduced target image 222 in Fig. 2, is obtained.

Fig. 4 shows schematically and exemplarily a computer system 400 for training a machine learning model. The computer system 400 comprises a processor 410 which is operatively connected to a storage device 420. Furthermore, the computer system 400 is configured to receive and output data via interfaces 412, 414.

The memory device 420 stores program code which is executable by means of the processor 410. The computer system 400 is implementable by way of an integrated device, for example, arranged in an image acquisition apparatus. In other examples, at least some of the functionalities of the computer system 400 are implemented at a network node which is in network communication with other functionalities of the computer system 400 and, in some examples, with an image acquisition apparatus or an image database.

The memory device 420 stores program code which, when executed by means of the processor 410, configure the computer system 400 to perform a method as described above in connection with Figs. 1 to 3.

In particular, the memory device 420 stores program code which in combination with the processor 410 constitute a reference images receiving module 422 for receiving at least one reference baseline image of a body region of a patient, at least one reference low-dose image of the body region of the patient and at least one reference high-dose image of the body region of the patient. The memory device 420 further stores program code corresponding to a reference subtraction images producing module 424 for producing a reference low-dose subtraction image at least partially based on a difference between the reference baseline image and one or more of the at least one reference low-dose image, and producing a reference high-dose subtraction image at least partially based on a difference between the reference high-dose image and the reference baseline image.

The memory device 420 further stores program code corresponding to a reference noise parameter determining module 426 for determining at least one reference high-dose noise parameter indicative of one or more noise characteristics of the reference high-dose subtraction image, a noise reduction procedure applying module 428 for applying a noise reduction procedure to the reference high-dose subtraction image to produce a noise-reduced target image based at least partially on the reference high-dose noise parameter, and a machine learning model training module 430 for training, based at least on the reference low-dose subtraction image and the noise-reduced target image, at least one machine learning model configured to generate, based on input data relating at least to an input low-dose subtraction image, a prediction high-dose subtraction image.

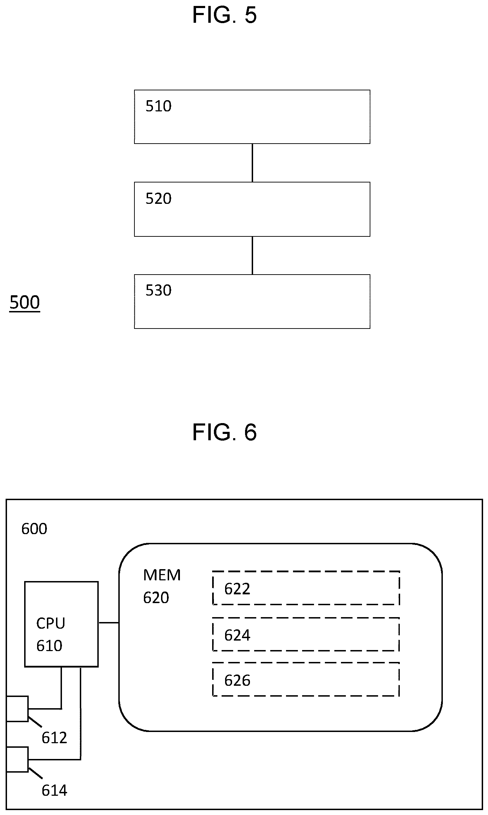

Fig. 5 shows a flow diagram of a method 500 for generating a contrast-enhanced diagnostic image of a body region of a patient. The method 500 is performed, for example, by means of an image data processing system, such as the image data processing system 600 described in connection with Fig. 6. The method 500 uses a machine learning model which has been trained based at least partially on a noise-reduced target image, as described, for example, in connection with Figs. 1 to 4.

The method 500 comprises receiving an input baseline image of a body region of a patient and at least one input low-dose image of the body region of the patient, step 510. The input low-dose image has been acquired when a first amount of a contrast-enhancing agent has been applied to the body region of the patient, and the input baseline image has been acquired when less than the first amount of the contrast-enhancing agent has been applied to the body region of the patient.

With reference to Fig. 2, once a machine learning model 218 has been trained as described above, a data flow of the method 500 resembles the data flow of the method 100 as represented in Fig. 2 by the blocks 202, 204, 206, 208, 218 and 220. This applies, with the modification that the reference baseline image 202, the reference low-dose image 204 and the reference low-dose subtraction image 208 in the context of the method 100 are represented in the case of the method 500 by an input baseline image 202, an input low-dose image 204 and an input low-dose subtraction image 208, respectively.

The method 500 further comprises producing an input low-dose subtraction image at least partially based on a difference between the input low-dose image and the input baseline image, step 520. With reference to the data flow shown in Fig. 2, step 520 corresponds, for example, to the contrast-preserving preprocessing performed at block 206 for obtaining a low-dose subtraction image 208.

The method 500 further comprises generating a prediction high-dose subtraction image at least partially by means of a trained machine learning model and based at least on the input low-dose subtraction image, step 530. The prediction high-dose subtraction image corresponds to a contrast enhancement relative to the input baseline image which is larger than the contrast enhancement of the input low-dose image relative to the input baseline image. With reference to the data flow shown in Fig. 2, step 530 corresponds, for example, to the generation of a prediction high-dose subtraction image 220 by means of the machine learning model 218 based on a low-dose subtraction image 208.

In some examples, the method 500 further comprises spatially registering and intensity-normalizing any of the input baseline image, the input low-dose image and the input low-dose subtraction image. In some of these examples, any of the producing, determining and generating steps 510, 520, 530 are performed using the respective spatially registered and intensity-normalized input images.

Additionally, or alternatively, in some examples, the method 500 further comprises applying the prediction high-dose subtraction image to an anatomical image of the body region of the patient to produce a combined contrast-enhanced image of the body region, and outputting the combined contrast-enhanced image of the body region.

Fig. 6 shows schematically and exemplarily an image data processing system 600 for generating a contrast-enhanced diagnostic image of a body region of a patient. The image data processing system 600 comprises a processor 610 which is operatively connected to a storage device 620. Furthermore, the image data processing system 600 is configured to receive and output data via interfaces 612, 614.

The memory device 620 stores program code which is executable by means of the processor 610. The image data processing system 600 is implementable by way of an integrated device, for example, arranged in a diagnostic imaging apparatus. In other examples, at least some of the functionalities of the image data processing system 600 are implemented at a network node which is in network communication with other functionalities of the image data processing system 600 and, in some examples, with functional components of a diagnostic imaging apparatus.

The memory device 620 stores program code which, when executed by means of the processor 610, configure the image data processing system 600 to perform a method as described above in connection with Fig. 5.

In particular, the memory device 620 stores program code which in combination with the processor 610 constitute an input images receiving module 622 for receiving an input baseline image of a body region of a patient and at least one input low-dose image of the body region of the patient. The memory device 620 further stores program code corresponding to an input low-dose subtraction image producing module 624 for producing an input low-dose subtraction image at least partially based on a difference between the input low-dose image and the input baseline image. The memory device 620 further stores program code corresponding to a prediction high-dose subtraction image generating module 626 for generating, at least partially by means of a trained machine learning model, a prediction high-dose subtraction image based at least on the input low-dose subtraction image.

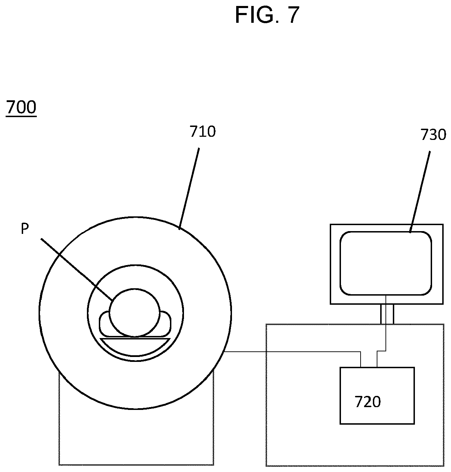

Fig. 7 shows schematically and exemplarily a diagnostic imaging system 700. The diagnostic imaging system 700 comprises a detector device 710 which is configured to obtain spatially resolved image information pertaining to a patient P and to output corresponding image data. The diagnostic imaging system 700 further comprises an image data processing system 720 which is adapted to receive and process image data received from the detector device 710. The image data processing system 720 is an image data processing system according to any of the examples described above in connection with Figs. 5 and 6.

The diagnostic imaging system 700 further comprises a diagnostic image outputting interface 730 which is configured to receive from the image data processing system 710 processed image data, in particular contrast-enhanced diagnostic images which have been generated by means of the image data processing system 720, and to output the received image data. In the shown example, the diagnostic image outputting interface 730 comprises a display unit of the diagnostic imaging system which is adapted to visually output images which have been generated by the image data processing system 720. In other examples of the diagnostic imaging system 700, the diagnostic image outputting interface 730 additionally, or alternatively, comprises a data output interface adapted to output computer data in which image information generated by the image data processing system 720 is encoded.

In the shown example, the diagnostic imaging system 700 is a magnetic resonance imaging system. However, as will be appreciated, the above-described techniques for training one or more machine learning models and generating contrast-enhanced diagnostic images are also applicable to other types of diagnostic imaging, such as computed tomography, and the like.

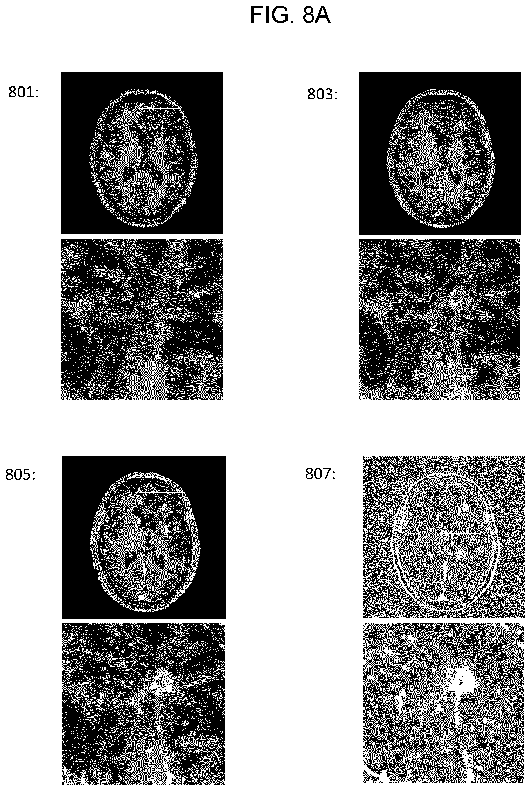

Figs. 8A to 8C show examples of contrast-enhanced diagnostic images obtained by different contrast-enhancement techniques.

Fig. 8A shows diagnostic images corresponding to different levels of contrast enhancement in accordance with a conventional application of different doses of a contrast-enhancing agent and image subtraction. Image 801 shows in the upper image portion a baseline image of a cerebral cross-section without contrast enhancement. The lower portion of Image 801 shows an enlarged detail of the upper image portion. Image 803 shows a low-dose image of the cerebral cross-section of Image 801, after a first dose of a contrast-enhancing agent has been applied. In Image 803, several bright spots and contours are found which appear enhanced relative to Image 801. Image 805 shows a high-dose image of the same cerebral cross-section, that is, after another, supplementary, dose of the contrast-enhancing agent has been applied. In Image 805, the bright spots and contours as found in Image 803 appear further enhanced and additional contours can be discerned. Image 807 is a subtraction image produced by subtracting the baseline image according to Image 801 from the high-dose image according to Image 805, thus representing the total contrast-enhancement as achieved by conventional use of a contrast-enhancing agent.

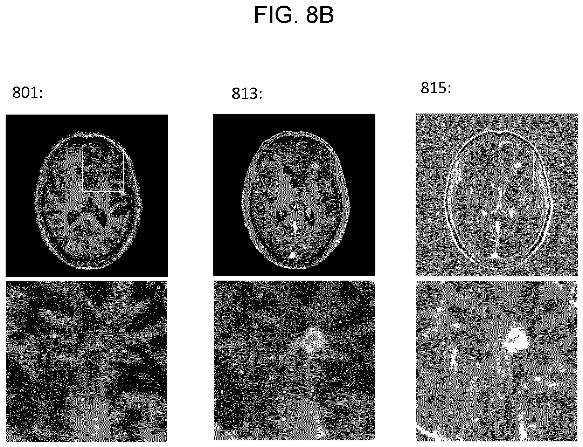

Fig. 8B shows diagnostic images corresponding to different levels of contrast enhancement based partially on prediction using a trained machine learning model. Image 801 corresponds to Image 801 in Fig. 8A, i.e., showing the baseline image. Image 813 is a prediction high-dose image, which has been generated using a machine learning model that has been trained based on a subtraction image without noise reduction. That is, the machine learning model used to generate the prediction in Image 813 has been trained to emulate, by way of prediction, a contrast signal plus noise as contained in a contrast-enhanced image. Image 815 is the corresponding subtraction image produced by subtracting the baseline image according to Image 801 from the prediction according to Image 813, thus representing the total contrast-enhancement plus the noise as generated by the machine learning model in this case.

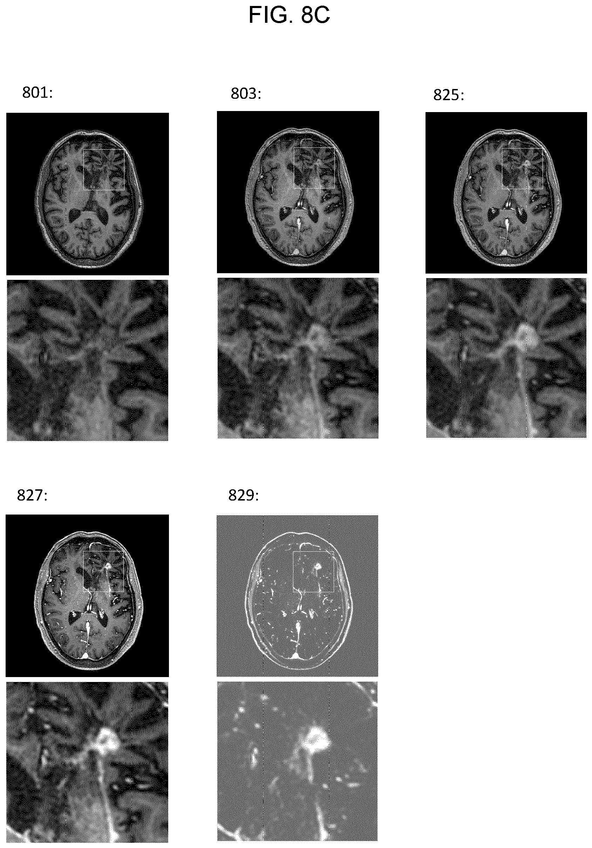

Fig. 8C shows diagnostic images corresponding to different levels of contrast enhancement based on prediction using a trained machine learning model in accordance with the disclosure. Image 801 shows again the baseline image, and the low-dose image is again shown as Image 803. Images 825 and 827 show respective superpositions of the baseline and low-dose images 801, 803 with a prediction high-dose subtraction image generated by a trained machine learning model based on a noise-reduced target image, in accordance with the methods described herein. Image 829 shows the prediction high-dose subtraction image which in Images 825 and 827 has been respectively superimposed on the baseline and low-dose images 801, 803.

As can be seen from a comparison of Images 829 and 815, generating a prediction high-dose subtraction image by means of a machine learning model which has been trained based on a noise-reduced target image yields a contrast prediction which appears more selective, or filtered, than a prediction generated by a machine learning model which has been trained to emulate both contrast signal and noise in combination. Correspondingly, as can be seen from a comparison of Images 827 and 813, a contrast can be further enhanced by the described method by superimposing the prediction according to Image 829 on the low-dose image according to Image 803, rather than on the baseline image according to Image 801. As such, the method provided herein also enables for extended possibilities of image processing, especially purposeful processing of visual contrast enhancement, in accordance with a user's needs or preferences.

## Claims

1. Method (100), performed by means of a computer system (400), for training a machine learning model (218), the machine learning model (218) configured to generate contrast-enhanced diagnostic images (220), the method (100) comprising:
- receiving (110) at least one reference baseline image (202) of a body region of a patient (P), at least one reference low-dose image (204) of the body region of the patient (P) and at least one reference high-dose image (210) of the body region of the patient (P), the reference low-dose image (204) acquired when a first amount of a contrast-enhancing agent has been applied to the body region, the reference high-dose image (210) acquired when a second amount of the contrast-enhancing agent larger than the first amount has been applied to the body region, and the reference baseline image (202) acquired when less than the first amount of the contrast-enhancing agent has been applied to the body region;
- producing (120; 206) a reference low-dose subtraction image (208) at least partially based on a difference between the reference baseline image (202) and one or more of the at least one reference low-dose image (204), and producing (120; 212) a reference high-dose subtraction image (214) at least partially based on a difference between the reference high-dose image (210) and the reference baseline image (202);
- determining (130; 216) at least one reference high-dose noise parameter (308, 312) indicative of one or more noise characteristics of the reference high-dose subtraction image (214);
- applying (140; 216), based at least partially on the reference high-dose noise parameter (308, 312), a noise reduction procedure to the reference high-dose subtraction image (214) to produce a noise-reduced target image (222);
- training (150), based at least on the reference low-dose subtraction image (208) and the noise-reduced target image (222), at least one machine learning model (218) configured to generate, based on input data relating at least to an input low-dose subtraction image (208), a prediction high-dose subtraction image (220).

2. Method according to claim 1, further comprising determining at least one reference low-dose noise parameter indicative of one or more noise characteristics of the reference low-dose subtraction image (208),
wherein training (150) the at least one machine learning model (218) is further performed based on the reference low-dose noise parameter.

3. Method according to claim 1 or claim 2, wherein the prediction high-dose subtraction image (220) is configured for being applied to an anatomical image of the body region of the patient (P) to produce a combined contrast-enhanced image of the body region, in particular wherein a contrast enhancement of the combined contrast-enhanced image is larger than a contrast enhancement of an input low-dose image (204) underlying the input low-dose subtraction image (208).

4. Method according to any one of the preceding claims, wherein:
- producing (120; 206) the reference low-dose subtraction image (208) comprises subtracting image data included in, and/or derived at least partially from, the reference base-line image (202) from image data included in, and/or derived at least partially from, one or more of the at least one reference low-dose image (204), and/or
- producing (120; 212) the reference high-dose subtraction image (214) comprises subtracting image data included in, and/or derived at least partially from, one or more of the at least one reference baseline image (202) from image data included in, and/or derived at least partially from, the reference high-dose image (210).

5. Method according to any one of the preceding claims, wherein applying (140; 216) the noise reduction procedure to the reference high-dose subtraction image (214) comprises at least one of:
- applying a statistical noise filter, in particular a guided filter, to the reference high-dose subtraction image (214), wherein a granularity of the statistical noise filter is selected based at least partially on the reference high-dose noise parameter (308, 312), and/or
- processing the reference high-dose subtraction image (214) by means of at least one second machine learning model, in particular a neural network, which has been trained for noise reduction on image data, in particular, wherein the reference high-dose noise parameter (308, 312) is provided as input data to the second machine learning model.

6. Method according to claims 4 and 5, wherein determining (130; 216) the reference high-dose noise parameter (308, 312) is performed based on accumulated pixel data (308) of the reference high-dose subtraction image (214), wherein the accumulated pixel data (308) has been accumulated from pixel data having an inverse sign relative to a prevailing sign of the pixel data (308) of the reference high-dose subtraction image (214).

7. Method according to any one of the preceding claims, further comprising spatially registering and intensity-normalizing any of the reference baseline image (202), the reference low-dose image (204), the reference high-dose image (210), the reference low-dose subtraction image (208) and the reference high-dose subtraction image (214), wherein any of the producing (120; 206, 212), determining (130; 216), applying (140) and training steps are performed using the respective spatially registered and intensity-normalized reference images, and/or
wherein training (150) the at least one machine learning model comprises:
- calculating a loss (224) based on a difference, in particular based on a statistical divergence, between the noise reduced target image (222) and the prediction high-dose subtraction image (220) generated by means of the at least one machine learning model (218), and
- adjusting the at least one machine learning model (218) in accordance with the calculated loss.

8. Method (500), performed by means of an image data processing system (600), for generating a contrast-enhanced diagnostic image of a body region of a patient (P), the method comprising:
- receiving (510) an input baseline image (202) of a body region of a patient (P) and at least one input low-dose image (204) of the body region of the patient (P), the input low-dose image (204) acquired when a first amount of a contrast-enhancing agent has been applied to the body region and the input baseline image (202) acquired when less than the first amount of the contrast-enhancing agent has been applied to the body region;
- producing (520; 206) an input low-dose subtraction image (208) at least partially based on a difference between the input low-dose image (204) and the input baseline image (202); and
- generating (530; 218), at least partially by means of a trained machine learning model (218), a prediction high-dose subtraction image (220) based at least on the input low-dose subtraction image (202), wherein the prediction high-dose subtraction image (220) corresponds to a contrast enhancement relative to the input baseline image (202) which is larger than a contrast enhancement of the input low-dose image (204) relative to the input baseline image (202),
wherein the trained machine learning model (218) has been trained based at least partially on a noise-reduced target image (222).

9. Method according to claim 8, wherein the trained machine learning model (218) has been trained in accordance with the method of any one of claims 1 to 7.

10. Method according to claim 8 or claim 9, further comprising:
- spatially registering and intensity-normalizing any of the input baseline image (202), the input low-dose image (204) and the input low-dose subtraction image (208), wherein any of the producing (520; 206) and generating (530; 218) steps are performed using the respective spatially registered and intensity-normalized input images (202, 204, 208), and/or
- applying the prediction high-dose subtraction image (220) to an anatomical image of the body region of the patient (P) to produce a combined contrast-enhanced image of the body region, and outputting the combined contrast-enhanced image of the body region.

11. Computer program product comprising portions of program code which, when executed by a processor of a computer device, will cause the computer device to perform the method of any one of the preceding claims.

12. Computer system (400), in particular for training a machine learning model, the computer system comprising a processor (410) and a storage device (420) operatively coupled to the processor (410), the storage device (420) storing portions of program code which, when executed by the processor (410), cause the computer system (400) to perform the method of any one of claims 1 to 7.

13. Image data processing system (600), in particular for generating a contrast-enhanced diagnostic image of a body region of a patient (P), the image data processing system (600) comprising a processor (610) and a storage device (620) operatively coupled to the processor (610), the storage device (620) storing portions of program code which, when executed by the processor (610), cause the image data processing system (600) to perform the method of any one of claims 8 to 10.

14. Diagnostic imaging system (700) comprising:
- an image data processing system (710) according to claim 13;
- at least one image sensor (720) configured to detect spatially resolved image information pertaining to a patient (P) and to output corresponding image data towards the image data processing system (710), and
- a diagnostic image outputting interface (730) configured to output a contrast-enhanced diagnostic image which has been generated by means of the image data processing system (710) at least partially based on image data received from the image sensor (720).

15. Set of diagnostic images of a body region of a patient (P), the set of diagnostic images comprising at least two images of the body region of the patient (P) which show agreement with respect to a noise pattern included in each of the at least two images and which differ from each other with respect to a degree of contrast enhancement shown in the at least two images.
